# EUROPÄISCHE PATENTANMELDUNG

(11) **EP 4 273 732 A1**
(43) Veröffentlichungstag der Anmeldung: **08.11.2023**
(21) Anmeldenummer: 22171506.3
(22) Anmeldetag: 04.05.2022
(51) Int. Cl.: G06F 30/17, G06F 111/04, G06F 119/18

(54) **VERFAHREN UND VORRICHTUNG ZUR VALIDIERUNG VON ERZEUGNISSPEZIFIKATIONEN FÜR QUALITÄTSGEPRÜFTE ERZEUGNISSE**

(71) Anmelder: Carl Zeiss Industrielle Messtechnik GmbH, 73447 Oberkochen (DE)
(72) Erfinder: Labbé-Laurent, Marcel, 73430 Aalen (DE); Schüll, Reiner, 73479 Ellwangen (DE); Eckardt, Nils, 73655 Plüderhausen (DE)
(74) Vertreter: Obst, Bernhard

(57) **Zusammenfassung**

Die Erfindung betrifft ein Verfahren zur Validierung von Erzeugnisspezifikationen (130) für qualitätsgeprüfte Erzeugnisse (100), bei deren Qualitätsprüfung mindestens eine geometrische Eigenschaft des jeweiligen Erzeugnisses (100) oder eines Bestandteils des jeweiligen Erzeugnisses (100) vermessen wird, umfassend die Schritte: Erfassen einer Erzeugnisspezifikation (130) für ein Erzeugnis (100); Prüfen der Erzeugnisspezifikation (130) auf Übereinstimmung mit Vorgaben; und Ausgeben eines Validierungsergebnisses (140, 240); wobei zumindest ein Teil der Vorgaben als Regeln (402) erfasst wird, wobei die erfassten Regeln (402) zumindest Messbarkeitsregeln (452) umfassen, die Fähigkeiten und/oder Beschränkungen für ein Ausführen von Messungen angeben, und das Prüfen der Erzeugnisspezifikation (130) auf Übereinstimmung mit den Vorgaben ein Anwenden der Regeln umfasst, wobei bei jeder Regelanwendung als ein Regelanwendungsergebnis zumindest eine Übereinstimmung oder Abweichung mit der entsprechenden Regel festgestellt wird, und das Validierungsergebnis (140, 240) auf Basis der Regelanwendungsergebnisse erzeugt wird. Die Erfindung betrifft ferner ein Computerprogramm zum Ausführen des Verfahrens und eine Validierungsvorrichtung (200).

## Beschreibung

Die Erfindung betrifft ein Verfahren zur Validierung von Erzeugnisspezifikationen, insbesondere Konstruktionszeichnungen in Form eines CAD-Modells gemeinsam mit Produkt- und Herstellungsinformationen (PMI - engl.: Product and Manufacturing Information), für qualitätsgeprüfte Erzeugnisse, bei deren Qualitätsprüfung mindestens eine geometrische Eigenschaft des jeweiligen Erzeugnisses oder eines Bestandteils des jeweiligen Erzeugnisses vermessen wird. CAD steht hierbei für den englischen Ausdruck "computer aided design" (computergestützte Konstruktion). Die Erfindung betrifft ferner Programmcode zur Umsetzung des Verfahrens mit Hilfe eines Computers und eine Validierungsvorrichtung.

Aus dem Stand der Technik ist es bekannt, bei Qualitätserzeugnissen diese als Ganzes oder zumindest Bestandteile hiervon während des Produktionsprozesses oder nach deren Fertigstellung zu vermessen. Dieses gilt beispielsweise für einige sicherheitsrelevante Bauteile von Maschinen. Grundsätzlich sollten alle tolerierten Bauteile auch gemessen werden, praktisch wird dieses aus Kostengründen bei unkritischen Bauteilen oft nur stichprobenartig durchgeführt.

Insbesondere bei der Entwicklung neuer Produkte und/oder Prototypen zeigt es sich, dass auch bei Erzeugnisspezifikationen, die bei der Konstruktion auf CAD-Systemen erstellt werden und zusätzlich zu einem CAD-Modell üblicherweise noch Produkt- und Herstellungsinformationen aufweisen, nicht in jedem Fall gewährleistet werden kann, dass Produkte gemäß den dort festgelegten Produktspezifikationen durch Messungen überprüfbar sind. Neben der rein technischen Möglichkeit der Überprüfbarkeit, existiert zusätzlich das Interesse daran festzustellen, ob die technische Überprüfbarkeit auch mit einem vertretbaren Messaufwand realisierbar ist, insbesondere hinsichtlich der Messdauer, aber auch hinsichtlich eines notwendigen Einsatzes von Messmaschinen etc. Bei der Konstruktion können Mehrdeutigkeiten auftreten, die nur schwer zu detektieren sind. Fehler können hierbei uneindeutige oder fehlerhafte Tolerierung, unzulässige Kombinationen von Modifikatoren in Toleranzindikatoren beispielsweise nach der ISO GPS-Norm (GPS - geometrische Produktspezifikation) sein. Auch eine ungünstige Wahl von Bezügen kann dazu führen, dass ein gemäß den Spezifikationen hergestelltes Erzeugnis gar nicht oder nicht eindeutig und reproduzierbar vermessen werden kann. Solche Fehler und Mehrdeutigkeiten können auch dazu führen, dass das Produkt auf für die Fertigung vorgesehenen Maschinen gar nicht oder nicht eindeutig und wiederholbar herstellbar ist.

Solche bei der Konstruktion auftretenden Fehler, die zum Teil sehr subtil sein können, werden im Stand der Technik häufig erst spät in der Entwicklung eines neuen Produkts festgestellt. In der Erzeugnis-Spezifikation angegebene Tolerierungen, die nicht miteinander vereinbar sind, werden beispielsweise erst erkannt, wenn konkrete Mess-Prüfpläne erarbeitet werden und sich herausstellt, dass die Anforderungen nicht alle erfüllbar oder mit der nötigen Präzision messbar sind oder ein erforderlicher Messaufwand nicht vertretbar ist. Ein weiteres Problem stellen in diesem Zusammenhang ungünstig gewählte Bezüge und/oder Bezugsstellen dar, die eine vollständige Vermessung des Erzeugnisses oder eines Bestandteils erschweren oder unmöglich machen. Ein Beispiel hierfür wäre die Bestimmung von Toleranzen an unterschiedlichen Stellen eines Bauteils jeweils bezogen auf unterschiedliche Bezüge, die relativ zueinander jedoch nicht mit der erforderlichen Präzision zueinander vermessbar sind oder eine große Hebelwirkung auf die Abweichungsberechnung haben. Darüber hinaus können durch ungünstige Vorgaben die für die Vermessung notwendigen Prüfschritte sehr aufwendig und umfangreich sein, so dass die für die Prüfung benötigte Zeit erhöht ist, was beispielsweise einen Durchsatz an einer Messmaschine reduziert. Dieses führt zur Unwirtschaftlichkeit des Bauteils an sich. Ein Herstellungsaufwand und Messaufwand sollten insgesamt optimiert sein. Derzeit können solche Fehler nur durch erfahrene Konstrukteure oder Normexperten in Konstruktionszeichnungen aufgespürt werden. Häufig werden die Fehler jedoch erst durch Messtechniker festgestellt, nachdem bereits das zu vermessende Bauteil gefertigt ist. Oft werden Fehler sogar erst bei der Serienfertigung entdeckt. Um einen solchen Fehler zu beseitigen, ist daher ein erhöhter Kommunikationsaufwand, insbesondere zwischen verschiedenen Ebenen des Konstruktions-, Produktions- und Messprozesses, notwendig. Nicht in allen Fällen kann gewährleistet werden, dass solche Fehler vollständig beseitigt werden. Im ungünstigen Fall verbleiben einzelne Fehler, was dazu führt, dass bestimmte Bauteile bei der Vermessung nicht vollständig verifiziert werden können oder nur mit Einschränkungen. Werden diese Bauteile dennoch eingesetzt, besteht ein nicht unerhebliches Sicherheitsrisiko.

Der Erfindung liegt somit die technische Aufgabe zugrunde die Validierung von Erzeugnisspezifikationen, insbesondere Konstruktionszeichnungen zu verbessern, um hierdurch die Verifizierbarkeit von Erzeugnissen oder Bestandteilen von Erzeugnissen zu verbessern, insbesondere zu erleichtern und zu beschleunigen.

Die Aufgabe wird erfindungsgemäß durch ein Verfahren zur Validierung von Erzeugnisspezifikationen für qualitätsgeprüfte Erzeugnisse mit den Merkmalen des Anspruchs 1 ein Computerprogramm mit den Merkmalen des Anspruchs 11 sowie eine Validierungsvorrichtung mit den Merkmalen des Anspruch 12 gelöst. Vorteilhafte Ausgestaltungen der Erfindung ergeben sich aus den Unteransprüchen.

Der Erfindung liegt die Idee zugrunde, durch ein dynamisches und nicht auf ein konkretes Bauteil festgelegtes regelbasiertes Verfahren Erzeugnisspezifikationen, insbesondere Konstruktionszeichnungen in Form eine CAD-Modells mit Produkt- und Herstellungsinformationen, hinsichtlich der Messbarkeit und eines Messaufwands, insbesondere schon während der Herstellung der Erzeugnisspezifikation, zu valideren. Hierdurch wird bereits bei der Konstruktion in Regeln enthaltenes Wissen über die Messbarkeit von bestimmten Eigenschaften, die gemäß der Erzeugnisspezifikation zu prüfen sind, dem Konstrukteur in der Weise zu Verfügung gestellt, dass dieser seine Konstruktion auf die Messbarkeit hin prüfen kann, ohne eigenes spezielles Wissen über die Messtechnik besitzen zu müssen. Hierdurch können aufwendige Überarbeitungen von Konstruktionen und/oder Iterationszyklen bei einer Protypenfertigung reduziert werden, welches Kosten-, Material- und Zeitersparnisse bringt. Darüber hinaus können Messressourcen besser eingesetzt werden.

### Definitionen

Als Verifizieren oder Verifikation wird das Überprüfen eines Produkts oder Bauteils auf Übereinstimmung mit der Erzeugnisspezifikation verstanden.

Als Validieren wird das Überprüfen einer Erzeugnisspezifikation darauf verstanden, ob ein gemäß der Erzeugnisspezifikation angefertigte Produkt oder Bauteil verifizierbar ist oder sein wird.

Eine Spezifikationsangabe wird als messbar angesehen, wenn diese an einem gefertigten Produkt oder Bauteil anhand von in einer oder mehreren Messungen erhobenen Messergebnissen oder aus den Messergebnissen abgeleiteten Berechnungsergebnissen, insbesondere berechneten Größen, eine Übereinstimmung des gefertigten Produkts oder des Bauteils mit dieser Spezifikationsangabe überprüft werden kann, wobei neben Wertangaben auch immer deren Mess- und/oder Berechnungsunsicherheit und/oder Reproduzierbarkeit und/oder Genauigkeiten mit berücksichtigt werden. Ist eine Spezifikationsangabe beispielsweise ein Abstand zwischen zwei Bezugsstellen, deren Koordinaten grundsätzlich messbar sind, die jedoch nicht mit einer Reproduzierbarkeit oder Genauigkeit messbar sind, dass eine hieraus abgeleitete, errechnete, Abstandsangabe eine Genauigkeit und Reproduzierbarkeit aufweist, die mit der Spezifikationsangabe korrespondiert, so ist die Spezifikationsangabe nicht messbar.

### Bevorzugte Ausführungsformen

Insbesondere wird ein Verfahren zur Validierung von Erzeugnisspezifikationen für qualitätsgeprüfte Erzeugnisse, bei deren Qualitätsprüfung mindestens eine geometrische Eigenschaft des jeweiligen Erzeugnisses oder eines Bestandteils des jeweiligen Erzeugnisses vermessen wird, geschaffen. Das Verfahren umfasst die Schritte: Erfassen einer Erzeugnisspezifikation für ein Erzeugnis; Prüfen der Erzeugnisspezifikation auf Übereinstimmung mit Vorgaben und Ausgeben eines Validierungsergebnisses; wobei mindestens ein Teil der Vorgaben als Regeln bereitgestellt wird, wobei die bereitgestellten Regeln zumindest Messbarkeitsregeln umfassen, die Fähigkeiten und/oder Beschränkungen für ein Ausführen von Messungen angeben, und das Prüfen der Erzeugnisspezifikation auf Übereinstimmung mit den Vorgaben ein Anwenden der Regeln umfasst, wobei bei jeder Regelanwendung als ein Regelanwendungsergebnis zumindest eine Übereinstimmung oder Abweichung mit der entsprechenden Regel festgestellt wird, und das Validierungsergebnis auch auf Basis der Regelanwendungsergebnisse erzeugt wird. Hierbei werden in den Regeln angegeben logische und mathematische Operationen ausgewertet und angewendet. Die Regelanwendungen können Regelergebnisse anderer Regelanwendungen mit einbeziehen und hierrüber Regeln miteinander verknüpfen. Ergibt sich beispielsweise anhand der Regelanwendungsergebnisse, dass eine Erzeugnisspezifikation nicht alle Messbarkeitsregeln erfüllt, also beispielsweise in der Erzeugnisspezifikation in Form eines CAD-Modells mit Produkt- und Herstellungsinformationen verschiedene Tolerierungen angegeben sind, die nicht miteinander vereinbar sind oder von den zur Verfügung stehenden Messmaschinen nicht mit der notwendigen Genauigkeit geprüft werden können, so wird die entsprechende geprüfte Erzeugnisspezifikation, das heißt die Konstruktionszeichnungen mit Produkt- und Herstellungsinformationen für das entsprechende Erzeugnis als nicht korrekt gekennzeichnet. Hierdurch wird bereits während der Konstruktion oder unmittelbar nach deren Abschluss festgestellt, dass die Erzeugnisspezifikation noch Fehler enthält, die zu beseitigen sind. Hierdurch kann vermieden werden, dass Prototypen gebaut werden, die nicht auf Ihre Übereinstimmung mit der Erzeugnisspezifikation verifiziert werden können, weil benötigte Messwerte, d.h. Messergebnisse, nicht oder nicht mit ausreichender Genauigkeit erhoben werden können oder anhand der Messergebnisse die notwendigen Angaben in der Auswertung der Messergebnisse nicht oder nicht mit der ausreichenden Sicherheit (Genauigkeit) bestimmt werden können.

Als Messbarkeitsregeln werden solche Regeln angesehen, die einen Aussage oder Teilaussage darüber liefern, ob das in der Erzeugnisspezifikation definierte Erzeugnis verifizierbar ist, das heißt die Angaben der Erzeugnisspezifikation anhand von Messergebnissen oder hieraus errechneten Berechnungsergebnissen überprüft werden können. Hierrunter können Regeln fallen, die eine Interpretierbarkeit der Tolerierungen prüfen, aber auch Regeln, die abprüfen, ob eine vorgegebene Anzahl von maximal auszuführenden Einzelmessungen nicht überschritten wird, um nur einige Beispiele zu nennen. Soll ein Bauteil beispielsweise während einer Fertigung inline, d.h. in der Produktionsline, vermessen werden, so sind auch Regeln, die prüfen, ob eine Vermessung in einer Linientaktzeit möglich sind, Messbarkeitsregeln.

Auch eine Reproduzierbarkeit der Messung oder Messungen stellt ein Kriterium für die Verifizierbarkeit dar. Ist diese nicht gewährleistet, so liegt ebenfalls keine Verifizierbarkeit und keine Messbarkeit vor, da ein Erzeugnis anhand von solchen Messergebnissen und hieraus errechneten und ermittelten Berechnungsergebnissen nicht auf eine Übereinstimmung mit der Erzeugnisspezifikation geprüft werden kann.

Grundsätzlich können Regeln ein oder mehrere logische oder mathematische Operationen umfassen. Dieses bedeutet, dass bei der Regelanwendung diese logischen und mathematischen Operationen ausgeführt werden. Neben dem Abprüfen von logischen Operationen kann das Anwenden von Regeln auch das Ausführen und Berechnen von mathematischen Funktionen umfassen. Beim Anwenden der Regeln werden Angaben der Erzeugnisspezifikation und/oder Regelergebnisse anderer Regelanwendungen berücksichtigt. Regeln können somit auf anderen Regeln aufbauen und diese miteinander verknüpfen. Regeln, die als Gesamtheit abgeschlossen sind, werden üblicherweise in einer Bibliothek zusammengefasst.

Regeln können zusätzlich auch eine quantitative Angabe liefern, wie gut eine Übereinstimmung mit Vorgaben ist. Regeln die ein solches quantitatives Ergebnis umfassen, werden als Bewertungsregeln bezeichnet. Regeln, die die Messbarkeit betreffen, können beispielswiese auch eine Angabe liefern, die einschätzen lässt, wie hoch der Aufwand für einzelne Messschritte etc. ist.

Die Bibliotheken können eine Hierarchie aufweisen, so können Regeln einer übergeordneten Hierarchieebene, die Regelergebnisse einer niedrigeren Hierarchieebene außer Kraft setzen.

Vorzugsweise wird das Verfahren bereits während der Erzeugung der vollständigen Erzeugnisspezifikation angewendet. Auch wenn die Spezifikation nicht vollständig ist, können häufig die bereits enthaltenen Angaben darauf geprüft werden, ob diese bereits dazu führen, dass ein Erzeugnis oder dessen Bestandteile nicht korrekt vermessen werden können. Zusätzlich können auch Regeln angewendet werden, die eine Konformität auf eine oder mehrere Normen prüft. Hierbei können sowohl ein oder mehrere Konstruktionsnormen als auch eine oder mehrere Produktionsnormen als Basis für diese Regeln dienen.

Eine bevorzugte Ausführungsform des Verfahrens sieht daher vor, dass das Erfassen der Erzeugnisspezifikation über eine Softwareschnittstelle eines Konstruktionsprogramms erfolgt. Die Erzeugnisspezifikation wird von der Softwareschnittstelle des Konstruktionsprogramms bereitgestellt. Das Erfassen der Erzeugnisspezifikation über die Softwareschnittstelle eines Konstruktionsprogramms bedeutet somit, dass die Daten über eine Softwareschnittstelle aus dem Konstruktionsprogramm übergeben oder bereitgestellt werden. Hierdurch wird eine einfache und schnelle Anwendung des Verfahrens ermöglicht.

Die Bereitstellung kann aber auch beispielsweise in Form einer oder mehrerer Dateien erfolgen. Ebenso kann diese Erzeugnisspezifikation in Form von Datenpaketen bereitgestellt werden, die beispielsweise über ein Computernetzwerk übertragen werden. Das Erfassen der Erzeugnisspezifikation kann bei einer Ausführungsform über das Einlesen von Dateien aus einem Datenspeicher erfolgen.

Bei wieder einer anderen Ausführungsform kann das Erfassen der Erzeugnisspezifikation über eine Netzwerkschnittelle erfolgen, die beispielsweise als Webschnittstelle ausgebildet ist und die Erzeugnisspezifikation in Form von einer oder mehrerer Dateien oder in Form von Datenpaketen erfasst.

Um auch sicherzustellen, dass die Konstruktionszeichnungen, das heißt die Erzeugnisspezifikation kein Erzeugnis definiert, welches nicht herstellbar ist, ist bei einer Weiterbildung vorgesehen, dass das Erfassen der Regeln zusätzlich ein Erfassen von Prozessschrittregeln umfasst, wobei die Prozessschrittregeln Einschränkungen und/oder Fähigkeiten mindestens einer Fertigungsvorrichtung zum Ausführen eines Prozessschrittes bei der Herstellung des jeweiligen Erzeugnisses angeben. Auch hier wird bei der Prüfung der Erzeugnisspezifikation, wenn die Prozessschrittregeln angewendet werden, festgestellt, ob eine Übereinstimmung oder Abweichung mit den entsprechenden Regeln festgestellt wird. So können auch frühzeitig Konstruktionsfehler erkannt und aufgespürt werden, die zu einem Erzeugnis führen, welches mit den zur Verfügung stehenden Ressourcen nicht gemäß den Anforderungen der Erzeugnisspezifikation herzustellen ist.

Darüber hinaus ist es wünschenswert, dass als Validierungsergebnis nicht nur eine Übereinstimmung mit den Vorgaben für eine Messbarkeit oder Herstellbarkeit festgestellt wird, sondern insbesondere in dem Falle, dass die Messbarkeit oder Herstellbarkeit nicht gegeben ist, Hinweise oder Warnungen bereitgestellt werden. Dieses ist jedoch auch vorteilhaft, wenn eine Messbarkeit oder Herstellbarkeit des Erzeugnisses zwar gegeben ist, hiermit jedoch ein besonders hoher Aufwand verbunden ist, beispielsweise ein sehr aufwendiger (Mess-)Prüfplan zu absolvieren ist. Eine Weiterbildung der Erfindung sieht daher vor, dass zumindest einzelne der Regeln mindestens einen Satz Mindestvorgaben und mindestens einen Satz Vorzugsvorgaben umfassen, wobei als Regelanwendungsergebnis eine Übereinstimmung mit einer der zumindest einzelnen der Regeln festgestellt wird, wenn der mindestens eine Satz von Mindestvorgaben erfüllt ist und dem Regelanwendungsergebnis zusätzlich eine Warnungs- und/oder Vorschlagsinformationen hinzugefügt werden, wenn nicht auch der mindestens eine Satz von Vorzugsvorgaben erfüllt ist, wobei der Satz der Vorzugsvorgaben die Mindestvorgaben übertrifft und der Satz der Mindestvorgaben erfüllt ist, wenn der Satz der Vorzugsvorgaben erfüllt ist.

Einzelne Regeln sind somit so ausgebildet, dass sie nicht nur die Herstellbarkeit oder Messbarkeit überprüfen, sondern darüber hinaus auch prüfen, ob die Erzeugnisspezifikationen ein Erzeugnis so spezifizieren, dass dieses günstig herzustellen und/oder zu vermessen ist. So kann beispielsweise darauf hingewiesen werden, dass vorgegebene Tolerierungen am Rande der möglichen Messbarkeit festgelegt sind oder für einzelne Tolerierungen andere als die angegebenen Bezugselemente vorgeschlagen werden.

Hierbei hat es sich als besonders vorteilhaft herausgestellt, wenn die bereitgestellten Regeln auch Expertenwissenregeln umfassen, die Fähigkeiten und/oder Beschränkungen aufgrund von Erfahrungswissen mindestens eines Prozessschrittes oder Messschrittes angeben. Solches Erfahrungswissen, welches im Stand der Technik durch besonders erfahrene Mitarbeiter aus der Produktion oder der Messtechnik oder in einzelnen Fällen auch erfahrene Konstrukteure zur Verfügung steht, kann so frühzeitig in den Konstruktionsprozess miteingebracht werden. Hierüber ist es auch möglich in den Konstruktionsprozess frühzeitig Best-Practice-Ansätze, die in einem Unternehmen entwickelt sind, in den Konstruktionsprozess mit einzubringen und darauf zu achten, dass diese beachtet werden. Produktionsstättenspezifische Vorgaben oder Hausnormen können, so auf einfache Weise in das Verfahren integriert werden.

Um eine dynamische Verwaltung der Vorgaben zu erleichtern, hat es sich als vorteilhaft herausgestellt, die Regeln in Form von Bibliotheken bereitzustellen. In einer Bibliothek werden Regeln zusammengefasst, die inhaltlich miteinander in Beziehung stehen und kombinatorisch abgeschlossen, also unabhängig von Regelanwendungsergebnissen von Regeln sind, die nicht in der Bibliothek umfasst sind. Insbesondere ist es vorteilhaft, die Regeln, die mit einer Messmaschine oder einer Produktionsmaschine verknüpft sind, jeweils in einer Bibliothek zusammenzufassen. Hierdurch wird die Möglichkeit geschaffen, die Vorgaben auf einfache Weise anzupassen, wenn beispielsweise eine Messmaschine nicht mehr zur Verfügung steht oder durch eine neue Messmaschine ersetzt wird. So können beispielsweise die Fähigkeiten und Beschränkungen mindestens einer Fertigungsmaschine in einer Bibliothek als Prozessschrittregeln bereitgestellt werden.

Das Verfahren zur Validierung ermöglicht es zur Überprüfung einer Tauglichkeit einer Maschine, die in einem Prozessschritt bei der Fertigung eingesetzt werden soll, die Prozessschrittregeln, welche Fähigkeiten und Beschränkung der einen Maschine festlegen, oder zur Überprüfung der Tauglichkeit einer Messvorrichtung, die für die Messung des Erzeugnisses oder eines Bestandteils des Erzeugnisses eingesetzt werden soll, die Messbarkeitsregeln, welche die Fähigkeiten und Beschränkungen der Messvorrichtung angeben, als Vorgaben zu erfassen und als Erzeugnisspezifikation eine bereits zuvor validierte Erzeugnisspezifikation zu erfassen, die zuvor als den Vorgaben entsprechend eingestuft wurde, wobei die Maschine oder die Messeinrichtung als tauglich eingestuft werden, sofern für die Erzeugnisspezifikation erneut festgestellt wird, dass diese den Vorgaben entspricht. Hierbei versteht es sich, dass die Regelbibliotheken beziehungsweise Regeln, die die Messbarkeit über eine andere alternative Messeinrichtung oder eine Herstellung über eine andere alternative Produktionsmaschine angeben, bei der Validierung nicht berücksichtigt werden. Hierdurch kann auf einfache Weise festgestellt werden, ob eine Fertigungsmaschine oder eine Messmaschine durch eine andere ersetzt werden kann, ohne die Messbarkeit für bereits fertige Produkte zu gefährden und/oder deren Produktion zu verhindern oder zu beinträchtigen.

Regeln können auch so ausgestaltet sein, dass diese als Ergebnis Hinweise liefern, wie ein Messprozess verbessert werden kann, beispielsweise in dem andere als die in der Erzeugnisspezifikation gewählten Bezüge vorgeschlagen werden, die eine Beschleunigung der Messung bewirken oder eine Genauigkeit steigern, da beispielsweise die bei der Messung auftretende Hebel verringert werden.

Bei einer anderen Ausführungsform der Erfindung ist vorgesehen, dass die Vorgaben mindestens zwei alternative Regelsätze umfassen, die die Fähigkeiten und/oder Beschränkungen für ein Ausführen von Messungen für alternativ einsetzbare Messvorrichtungen sind, wobei die mindestens zwei alternativen Regelsätze jeweils zumindest eine einzelne Bewertungsregel umfassen, bei deren Regelanwendung als Regelanwendungsergebnis zusätzlich jeweils mindestens ein Übereinstimmungswert, der ein quantitatives Maß für die Übereinstimmung der Angaben der Erzeugnisspezifikation mit den Vorgaben der Regel angibt, umfasst, und anhand der Übereinstimmungswerte ermittelt wird, welche der alternativ einsetzbaren Messvorrichtungen für die Vermessung des durch die Erzeugnisspezifikation festgelegten Erzeugnisses oder Bauteils nutzbar ist oder welches für einen Einsatz zu bevorzugen ist.

Insbesondere, wenn zumindest einzelne Regeln als Bewertungsregeln ausgebildet sind, ist es möglich, einen Messaufwand zu quantifizieren. Hierdurch wird es, sofern auch Verbesserungsinformationen bei der Validierung ausgegeben werden, möglich, die Erzeugnisspezifikation bei der Konstruktion so zu gestalten, dass ein Messaufwand minimiert wird und optimiert an die entsprechenden Messeinrichtungen und/oder verfügbare Messsoftware zu den Messeinrichtungen angepasst wird. Hierdurch können insbesondere die Ressourcen der Messeinrichtungen deutlich besser eingesetzt werden und ein Durchsatz gesteigert werden. Ein Vorteil besteht auch darin, dass neue Produktionsstätten oder neue oder andere Messeinrichtungen oder Messdienstleister in eine bereits bestehende Prozesskette einfach integriert werden können. Es ist lediglich erforderlich, die Regeln, die die Fähigkeiten und Beschränkungen des neuen Messsystems und/oder der neuen Fertigungseinrichtung beschreiben, in die Validierungsvorrichtung einzubinden und/oder die mit einer ersetzten Messeinrichtung oder ersetzten Fertigungsvorrichtung verknüpften Regeln aus den Vorgaben zu entfernen. Dies erfolgt vorzugsweise über ein Registrieren beim Zufügen neuer Regeln oder Deregistrieren bei einem Entfernen von anzuwendenden Regeln.

Es kann somit erreicht werden, dass unmögliche Messungen verhindert werden. Aber auch Messungen, die beispielsweise aufgrund der Messdauer nicht ausführbar sind oder bei denen aus anderen Gründen der Messaufwand nicht vertretbar ist, können verhindert werden. Grundsätzlich ist es möglich, Messbarkeitsregeln als Bewertungsregeln auszugestalten, bei denen die Messbarkeit/Nichtmessbarkeit davon abhängt, ob eine Abweichung von den Vorgaben der Regel einen Schwellenwert überschreitet.

Bevorzugt wird zunächst anhand der Erzeugnisspezifikation ein von konkreten Messvorrichtungen unabhängiger Prüfplan generiert, der Abhängigkeiten der Prüfmerkmale untereinander analysiert. Danach werden die Regeln der Vorgaben, die Messbarkeitsregeln sind, auf diesen Prüfplan angewendet. Hierdurch können die Messbarkeitsregeln abstrahiert werden und deren Anwendung vereinfacht werden.

Das Validierungsverfahren wird vorzugsweise in einer zentralen Validierungsvorrichtung mit einer Validierungseinheit zur Verfügung gestellt. Beispielsweise kann die Validierung als ein Service oder Dienst über ein Kommunikationsnetzwerk, beispielsweise als Webdienst angeboten werden. Hierfür werden die Regelbibliotheken beispielsweise in einer Datenbank oder als Dateien in einem Speichermedium gespeichert. Die einzelnen Regeln, werden hierbei, wie oben bereits erwähnt, vorzugsweise als Bibliotheken zusammengefasst bereitgestellt. Dies kann beispielsweise darüber erfolgen, dass Regelbibliotheken als Dateien zur Verfügung gestellt werden und bei der zentralen Validierungsvorrichtung registriert werden. Die Regelbibliotheken sind dann in einem Datenspeicher als Dateien abgelegt. Alternativ oder zusätzlich ist es möglich, dass die Regeln über das Kommunikationsnetzwerk in die zentrale Validierungsvorrichtung geladen werden und von dieser beispielsweise in einer Datenbank oder ebenfalls als Dateien abgelegt werden.

Eine Ausführungsform sieht eine Validierungsvorrichtung zum Ausführen einer Validierung von Erzeugnisspezifikationen für qualitätsgeprüfte Erzeugnisse, bei deren Qualitätsprüfung mindestens eine geometrische Eigenschaft des jeweiligen Erzeugnisses oder eines Bestandteils des jeweiligen Erzeugnisses vermessen wird, vor, welche umfasst:
eine Validierungseinheit mit einem Eingang zum Erfassen einer Erzeugnisspezifikation, wobei die Validierungseinheit ausgebildet ist, die Übereinstimmung der Erzeugnisspezifikation mit Vorgaben, die in Form von Regeln vorliegen, zu prüfen und die Validierungseinheit einen Ausgang zum Ausgeben eines Validierungsergebnis umfasst, das anhand der Übereinstimmungen und/oder Abweichungen mit den Vorgaben abgeleitet ist.

Eine Weiterbildung sieht vor, dass mit der Validierungseinheit ein Speicher gekoppelt ist, in dem die Regeln abgelegt sind. So müssen die Regeln nicht für jede Validierung neu registriert werden.

Die Validierungseinheit umfasst vorzugsweise eine oder mehrere Rechnereinheiten, die jeweils einen oder mehrere Prozessoren und Arbeitsspeicher umfassen. Die Funktionalität der Validierungseinheit ist mittels Programmcodes ausgebildet, der auf dem oder den Prozessoren der einen oder der mehreren Rechnereinheiten ausgeführt wird. Hierdurch kann eine Einfache und flexible Ausführungsform geschaffen werden. Auch verteilte Rechnereinheiten und sogenannte virtuellen Computer in einem Netzwerk können verwendet werden.

Insbesondere wenn die Validierungsvorrichtung einen zentralen Dienst anbietet, sind der Eingang und der Ausgang der Validierungseinheit vorzugsweise eine Netzwerkschnittstelle.

Eine Erzeugnisspezifikation umfasst mindestens geometrische Nominaldaten und angeforderte Prüfmerkmale.

Bei einer Ausführungsform ist vorgesehen, dass die Validierung Bestandteil einer Messsoftware oder in das Programm einer Messeinrichtung integriert ist. Die Validierung wird ausgeführt, bevor eine eigentliche Messung ausgeführt wird, um sicherzustellen, dass die Produktverifikation mit den von Messeinrichtung erhobenen Messdaten und abgeleiteten Berechnungsergebnissen möglich sein wird. Die Validierung steht hier am Anfang einer Verifikation, in deren Verlauf mit der einen oder mehreren Messeinrichtungen das Erzeugnis oder ein oder mehrere Bauteile vermessen und hierbei Messdaten erfasst und anhand dieser und den Berechnungsergebnissen die Verifikation des Erzeugnisses oder eines Bauteils ausgeführt. Die Verifikation eines oder mehrerer Erzeugnisse umfasst somit die Schritte der Validierung gemäß einer der zuvor beschriebenen Varianten und die Ausführung mindestens einer Messung an dem einen Erzeugnis oder einem Bauteil des Erzeugnisses oder an den mehreren Erzeugnissen oder Bauteilen von den mehreren Erzeugnissen und Überprüfen, ob das oder die vermessenen Erzeugnisse oder deren Bauteile mit den Vorgaben der Erzeugnisspezifikation übereinstimmen, um das Erzeugnis oder die Erzeugnisse zu verifizieren. So erhält man qualitätsgeprüfte Erzeugnisse. Man erhält somit auch ein verbessertes Verifikationsverfahren und eine verbesserte Verifikationsvorrichtung für qualitätsgeprüfte Erzeugnisse.

Insgesamt liefert die Erfindung nach all ihren Aspekten folgende Vorteile:
- der Konstruktionsaufwand wird minimiert,
- der Produktionsaufwand wird minimiert,
- der Messaufwand im Sinne der physischen Vermessung zur Gewinnung der Messergebnisse wird minimiert,
- ein Auswerteaufwand der Messergebnisse wird minimiert.

Die Erfindung wird nachfolgend unter Bezugnahme auf eine Zeichnung näher erläutert. Hierbei zeigen:
- Fig. 1: eine schematische Ansicht eines Ablaufs eines Prozesses zum Herstellen von Qualitätserzeugnissen nach dem Stand der Technik, bei dem die Gefahr des Entstehens eines mit einem Risiko behafteten Erzeugnis besteht;
- Fig. 2: eine schematische Ansicht eines Ablaufs eines Prozesses zum Herstellen von Qualitätserzeugnisses nach einer Ausführungsform der vorliegenden Erfindung
- Fig. 3: eine schematische Darstellung zur Erläuterung der dynamischen Modifikation des Verfahrens zur Validierung von Erzeugnisspezifikationen; und
- Fig. 4: eine schematische Darstellung einer Fertigungsumgebung mit einer zentralen Validierungsvorrichtung.

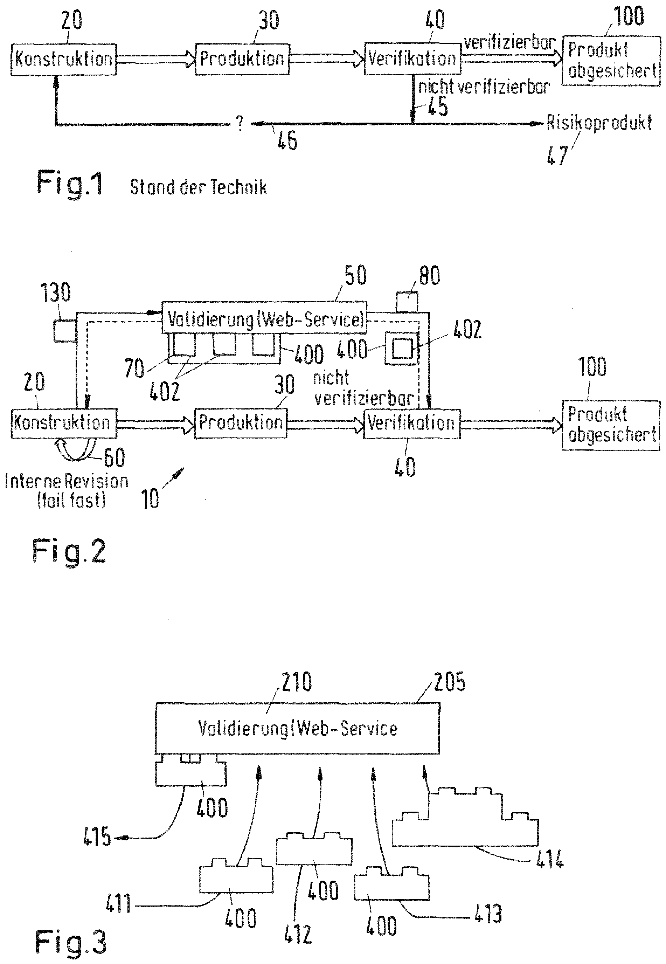

In Fig. 1 ist schematisch ein Ablaufs 10 eines Prozesses zum Herstellen von Qualitätserzeugnissen 100 nach dem Stand der Technik dargestellt, bei dem das Erzeugnis selbst oder zumindest ein Bestandteil des Erzeugnisses bei der Qualitätsprüfung in einem Verifikationsschritt 40 vermessen wird, um zu verifizieren, dass das Erzeugnis den Angaben seiner Erzeugnisspezifikation entspricht.

In einem ersten Prozessschritt 20 wird ein neues Erzeugnis konstruiert. Diese Konstruktion erfolgt heute üblicherweise computergestützt mit Hilfe eines Konstruktionsprogramms an einem Computer. Dieses Vorgehen wird als computergestütztes Designen (CAD - engl: Computer Aided Design) oder computergestütztes Konstruieren bezeichnet. Hierbei wird eine Erzeugnisspezifikation 130 erzeugt. Die eine geometrische Form festlegenden Informationen liegen üblicherweise in Form eines digitalen, meist dreidimensionalen, CAD-Modells vor, anhand dessen digitale Konstruktionszeichnungen erzeugbar sind. Das CAD-Modell und/oder die digitalen Konstruktionszeichnungen können beispielsweise in einer oder mehreren sogenannten CAD-Dateien gespeichert werden. Neben geometrischen Nominaldaten umfasst die Erzeugnisspezifikation üblicherweise auch sogenannte Produkt- und Herstellungsinformationen (PMI - engl.: Product and Manufacturing Information), welche nicht geometrische Attribute des Erzeugnisses beschreiben und spezifizieren. Diese bauen auf das CAD-Modell auf. Die Attribute der Produkt- und Herstellungsinformationen können beispielsweise Toleranzen, Abmessungen, Oberflächenbeschaffenheiten etc. angeben. Die Produkt- und Herstellungsinformationen werden vorzugsweise ebenfalls digital als PMI-Daten in einer oder mehreren Dateien, gegebenenfalls verknüpft mit dem CAD-Modell gespeichert.

Die in dem CAD-Modell und den PMI-Daten enthaltenen Angaben werden in einem nachfolgenden Produktionsschritt 30 genutzt, um eine oder mehrere Einheiten, z.B. einen Prototyp, des konstruierten Erzeugnisses zu fertigen. Hierfür können Verfahren der computergestützten Fertigung (CAM - engl.: Computer Aided Manufacturing) beispielsweis mittels Fertigungsmaschinen mit einer rechnergestützten numerischen Steuerung (CNC - engl.: Computerized Numerical Control) eingesetzt werden. Hierbei können beispielsweise CNC-Drehbänken oder CNC-Fräsmaschinen zum Einsatz kommen. Zusätzlich können auch Vorrichtungen der additiven Fertigung eingesetzt werden, wie beispielsweise 3D-Drucker etc. Grundsätzlich kann auch beliebig ein Fertigungsverfahren oder Vorrichtung verwendet werden.

Das CAD-Modell und die PMI-Daten werden auch benutzt, um in einem Verifikationsschritt 40 beispielsweise einen Prüfplan oder mehrere Prüfpläne für die Vermessung des Erzeugnisses mit Koordinatenmessgeräten (CMM - engl.: Coordinate Measuring Machine) oder anderen messfähigen Geräten, z.B. Computertomographen (CT), Mikroskopen etc., zu erstellen und die Übereinstimmung zwischen hergestelltem Erzeugnis, beispielsweise dem Prototyp, und der Erzeugnisspezifikation 130 zu überprüfen. Dieser Schritt wird als Verifizieren bezeichnet. Beim Überprüfen werden Daten, d.h., Messwerte oder Messergebnisse herangezogen, die beim Abarbeiten des Prüfplans oder der Prüfpläne mithilfe der entsprechenden messfähigen Geräte und Messmaschinen ermittelt sind.

Im Stand der Technik ist der Verifikationsschritt häufig gar nicht oder nur teilweise automatisiert. Teilweise ist bis zu diesem Schritt nicht einmal sichergestellt, dass die in dem CAD-Modell und den PMI-Informationen enthaltenen Angaben überhaupt mit den verfügbaren Messgeräten, insbesondere Koordinatenmessgeräten überprüfbar sind, d.h. überhaupt den Messbarkeitsvorgaben entsprechen. Auch eine Konformität mit entsprechenden Normen wird häufig nicht geprüft. Darüber hinaus können die Erzeugnisspezifikationen Angaben enthalten, die widersprüchlich sind, z.B. nicht miteinander vereinbare Toleranzangaben oder Bezüge aufweisen, die für die Vermessung mit der geforderten Präzision nicht geeignet sind, etc.

Unzulässige Kombinationen von Modifikatoren im Toleranzindikator nach den ISO GPS-Normen oder die ungünstige Wahl von Bezügen können nur bei einer sehr intensiven Analyse der Erzeugnisspezifikation aufgefunden werden. Zum Auffinden sind im Stand der Technik sehr erfahrene Konstrukteure oder Normexperten für ISO GPS/ ASME GDT benötigt, die teilweise jedoch auch nicht in der Lage sind, alle Fehler und ungünstigen Festlegungen aufzufinden. Wichtige Normen sind beispielsweise die ISO 1101 (DIN EN ISO 1101:2017-09: Geometrische Produktspezifikation (GPS) - Geometrische Tolerierung - Tolerierung von Form, Richtung, Ort und Lauf) und ISO 5459 (ISO 5459:2011-08: Geometrische Produktspezifikation (GPS) - Geometrische Tolerierung - Bezüge und Bezugssysteme), die auf weitere ISO GPS Normen und beispielsweise die Norm ASME Y14.5 (ASME Y14.5:2018: Eintragen von Maßen und Toleranzen) verweisen. Teilweise werden diese erst durch Messtechniker im Validierungsschritt oder sogar gar nicht aufgefunden. Im letzteren Falle entstehen risikobehaftete Erzeugnisse. Ebenso gibt es entsprechend Normen für die Fertigung.

Werden die Unzulänglichkeiten entdeckt, ist ein Umkonstruktion und/oder Anpassung der Fertigung notwendig. Hierfür ist eine Kommunikation zwischen Personen oder Einrichtungen notwendig, die an den verschiedenen Produktions- und/oder Herstellungsschritten beteiligt sind. Dieses ist kompliziert und fehleranfällig. Eine sichere Kontrolle und Überprüfung dieses Ablaufs können im Stand der Technik nur sehr schwer realisiert werden. Meist lassen sich durch einen geschickten Umgang mit der Tolerierung ein Aufwand für die Fertigung und die Prüfung und Vermessung deutlich reduzieren. Insgesamt werden Ressourcen eingespart und die Erzeugung des Produkts wirtschaftlicher.

Als Ergebnis des Verifikationsschrittes in verallgemeinerter Betrachtung, d.h. nicht auf das Verifikationsergebnis des einzelnen Erzeugnisses bezogen, kann das Erzeugnis verifizierbar oder nicht verifizierbar sein. Ist es nicht korrekt verifizierbar 45, so führt dieses, wie erwähnt, zu neuem Konstruktions- und Produktionsaufwand, falls erkannt wird 46, dass das Erzeugnis nicht korrekt verifizierbar ist. Andernfalls 47 führt der Ablauf zu einem allgemein risikobehafteten Erzeugnis, welches ungeachtet des Verifikationsergebnisses für ein konkretes Erzeugnis, auch wenn dieses als den Angaben der Erzeugnisspezifikation entsprechend erkannt wird, dennoch mit dem Risiko behaftet ist, dass es nicht den Angaben entspricht, die in zumindest einem Konstruktionsschritt festgelegt wurden. Für sicherheitsrelevante Erzeugnisse, deren Versagen zu Schäden an Sachwerten oder Personen führen kann, ist dieses problematisch. Durch ungünstige Tolerierung kann es sein, dass entweder schlechte Teile als gut bewertet werden oder aber auch zu viele gute Teile als schlecht aussortiert werden. Fener entsprechen Teile im Stand der Technik teilweise nicht einer zugesicherten Normgerechtigkeit, wenn eine Übereinstimmung mit den Normen beim Verifizieren nicht oder nicht vollständig geprüft wird.

Um das Entstehen solcher risikobehafteten Erzeugnisse zu verhindern oder deren Auftreten zumindest zu minimieren und einen Aufwand für Um- und Nachkonstruktion sowie Fertigungsanpassungen zu reduzieren, ist vorgesehen, die Möglichkeit zu schaffen, bereits bei der Konstruktion zu prüfen, ob die Erzeugnisspezifikation zu einem Erzeugnis führt, welches insbesondere zumindest im Hinblick auf die Messbarkeit die Vorgaben erfüllt, die dessen Verifikation erlauben.

Fig. 2 zeigt schematisch die Schritte gemäß einer neuen verbesserten Herstellung. Gleiche technische Merkmale sind in allen Figuren mit denselben Bezugszeichen gekennzeichnet.

Hierbei ist im Unterschied zum Stand der Technik vorgesehen, dass vorzugsweise schon während, jedoch spätesten bei Abschluss der Konstruktion die Erzeugnisspezifikation 130 auf eine Übereinstimmung mit Vorgaben 70 überprüft wird. Die Überprüfung wird als Validierung bezeichnet. Hierbei werden zumindest die Vorgaben bezüglich der Messbarkeit berücksichtigt. Stellt sich heraus, dass die Erzeugnisspezifikation nicht den Vorgaben entspricht, so wird dieses bereits während des Konstruktionsprozesses festgestellt. Die Konstruktion kann entsprechend angepasst werden. Es findet eine schnelle interne Revision 60 statt. Die Validierung der Erzeugnisspezifikation kann grundsätzlich in jedem Prozessschritt durchgeführt werden. Je früher diese im Konstruktions- und Produktionsprozess durchgeführt wird, gegebenenfalls auch mehrfach, desto schneller findet man Fehler und/oder ungünstige Konstruktionselemente. Eine Validierung im fortgeschrittenen Prozess kann auch noch Aussagen, die speziell für die Messung relevant sind, liefern. Beispielswiese kann vor einem Ausführen der Messungen die Information geliefert werden, dass eine Verifizierung des hergestellten Produkts oder Bauteils gegenüber der Erzeugnisspezifikation nicht möglich ist, weil die notwendigen Messwerte nicht oder nicht mit ausreichender Genauigkeit erfassbar sind, anhand derer oder der daraus abgeleiteten Berechnungsergebnisse die Übereinstimmung mit der Erzeugnisspezifikation geprüft werden kann.

Diese Überprüfung (Validierung) wird vorzugsweise iterativ während der Konstruktion ausgeführt. So können frühzeitig Festlegungen, insbesondere in den PMI-Daten, die problematisch, widersprüchlich oder fehlerhaft sind, erkannt und beseitigt werden. Eine Umkonstruktion in einem späten Stadium wird vermieden. Vorzugsweise wird die Validierung der Konstruktion automatisiert ausgeführt oder angestoßen. Sie kann jedoch auch später z.B. nach Abschluss der Konstruktion durchgeführt werden. Ebenso ist es möglich, die Validierung gesondert und nicht automatisiert auszulösen.

Darüber hinaus wird sichergestellt, dass ein gemäß einer solchen validierten Erzeugnisspezifikation im Produktionsschritt 30 hergestelltes Erzeugnis im Verifikationsschritt 40 grundsätzlich vollständig überprüft werden kann. Es treten somit unter den als mit den Angaben der Spezifikation übereinstimmenden Erzeugnissen 100 keine Risikoerzeugnisse auf, die einen versteckten Qualitätsmangel aufweisen.

Die Vorgaben 70 hinsichtlich der Messbarkeit werden zumindest teilweise in Form von Regeln 402 abgefasst. Bei der Validierung werden diese Regeln 402 auf die Erzeugnisspezifikation 130 angewendet. Das Ergebnis der Regelanwendung umfasst zumindest die Angabe, ob die Erzeugnisspezifikation mit den durch die entsprechende Regel beschriebenen Vorgaben übereinstimmt oder von diesen abweicht.

Eine Regel kann beispielsweise festlegen, dass in der Spezifikation geforderte einzuhaltende Toleranzen nicht kleiner als die erreichbare Präzision von für die Vermessung der Erzeugnisse zur Verfügung stehenden Koordinatenmessgeräten sein darf.

Üblicherweise wird anhand der Erzeugnisspezifikation zunächst ein abstrakter Prüfplan erzeugt, anhand dessen Prüfabhängigkeiten ermittelt werden können. Ein solches Vorgehen ist aus dem Stand der Technik bekannt und beispielsweise in der EP 3 805 693 beschrieben.

Auf einen solchen allgemeinen abstrakten Prüfplan, der unabhängig von den zur Verfügung stehenden Messgeräten ermittelt wird, werden dann üblicherweise die Messbarkeitsregeln bei der Validierung angewendet.

Die Regeln 402 geben somit Fähigkeiten und/oder Beschränkungen für ein Ausführen von Messungen an. Diese sind gegebenenfalls ggf. auf die zur Verfügung stehenden Messgeräte angepasst.

Daher hat es sich als vorteilhaft herausgestellt, die Regeln, die beispielsweise, die Fähigkeiten und Beschränkungen eines Messgerätes oder einer Messmaschine beschreiben, zusammenzufassen. Dieses erfolgt in sogenannten Bibliotheken 400. Ein Satz Regeln ist in sich abgeschlossen, wenn diese bei Ihrer Anwendung nicht auf andere Regelergebnisse von Regeln angewiesen sind, die nicht zu dem Satz gehören. Ein in sich abgeschlossener Satz von Regeln, die aber miteinander in Beziehung stehen, wird üblicherweise in einer der Bibliotheken 400 zusammengefasst.

Ein Prüfplan 80 der Validierung kann auch bei dem Verifikationsschritt 40 genutzt werden, wobei dieser dann bezüglich der vorhandenen Messgeräte konkretisiert werden muss.

Einer Validierungsvorrichtung werden somit die Regeln vorzugsweise in Bibliotheken zur Verfügung gestellt. Die Regeln einer Bibliothek können beispielsweis in einer Datei zusammengefasst sein. Der Validierungsvorrichtung werden dann ein oder mehrere Dateien, die jeweils eine Regelbibliothek umfassen, für die Validierung zur Verfügung gestellt. Diesen Vorgang bezeichnet man auch als Registrieren einer Regelbibliothek.

Ein Vorteil der Verwendung von Bibliotheken besteht darin, dass die Vorgaben zum Beispiel hinsichtlich der Messbarkeit einfach und dynamisch angepasst werden können. Werden beispielsweise eine neue Messmaschine oder ein neues Messgerät bereitgestellt, so können die Vorgaben hinsichtlich der Fähigkeiten und Beschränkungen der neuen Messmaschine oder des neuen Messgeräts in die Validierung einfach mit einbezogen werden, indem die Regelbibliothek der neuen Messmaschine oder des neuen Messgeräts bei der Validierungsvorrichtung registriert wird.

Ähnlich kann bei einem Ausfall einer Messvorrichtung die zugehörige Regelbibliothek deregistriert werden.

Über eine hierarchische Gliederung der Bibliotheken ist es möglich zu erreichen, dass Hausnormen oder Sondervorgaben, die in einer oder mehreren Regelbibliotheken zusammengefasst sind, Vorrang vor anderen Regeln von Bibliotheken niedrigerer Priorität genießen und diese außer Kraft setzen.

In Fig. 3 ist die dynamische Anpassbarkeit der Validierung schematisch exemplarisch dargestellt. Bei einem Validierungsdienst 210, der beispielsweise als Webservice auf einem Web-Server 205 ausgebildet ist, können unterschiedlichste Regelbibliotheken 400 registriert oder auch wieder deregistriert werden. Als Beispiele werden eine Normregelbibliothek 411, welche eine neue Norm repräsentiert, eine Prozessschrittregelbibliothek 412, die die Fähigkeiten und Beschränkungen einer neuen Fertigungsmaschine angeben, eine Logistikregelbibliothek 413, die die Fähigkeiten und Beschränkungen eines neuen Logistikpartners angeben, sowie eine weiter Prozessschrittbibliothek 414 genannt, die die Fähigkeiten und Beschränkungen eines neuen Standorts angibt. Diese werden bei dem Validierungsdienst 210registriert. Eine andere Prozessschrittbibliothek 415 einer alten Fertigungsmaschine wird deregistriert.

Eine Validierung kann bereits im Vorfeld einer Anschaffung einer neuen Messmaschine oder dem Ersetzen einer alten Messmaschine durch eine neue Messmaschine erfolgen. Beispielsweise wird die Regelbibliothek der alten Messmaschine deregistriert und die Regelbibliothek der neuen Messmaschine registriert. Anschließend können Erzeugnisspezifikationen, die bereits als den Vorgaben der alten Regelgesamtheit entsprechend validiert waren, gegenüber den neuen Vorgaben validiert werden. Hierdurch kann auf einfache Weise im Vorfeld solcher Veränderungen geprüft werden, ob die Qualitätserzeugnisse auch weiterhin zuverlässig verifiziert werden können, d.h. dass insbesondere weiterhin deren Messbarkeit gewährleistet ist.

Die Validierung lässt sich vorteilhaft auch auf andere Prozessschritte, wie den Produktionsschritt, aber auch auf Logistikschritte etc. erweitern. Für den jeweiligen Prozessschritt werden die Fähigkeiten und Beschränkungen in einem Regelsatz, vorzugsweise zusammengefasst als Regelbibliothek bereitgestellt und in die Validierung mit einbezogen. So lässt sich zum Beispiel feststellen, ob sich das konstruierte Erzeugnis und dessen Bestandteile auf den zur Verfügung stehenden Produktionsreinrichtungen fertigen lassen oder ob ein Logistikpartner in der Lage ist, die Erzeugnisse zu verpacken und/oder zu transportieren, um nur einige nicht abschließend aufgezählte Beispiele zu nennen.

Auch eine Überprüfung auf eine Normkonformität kann mit Hilfe einer oder mehrerer Normregelbibliotheken erfolgen.

Besonders vorteilhaft ist es, wenn die Regeln auch Angaben enthalten, die dem Konstrukteur Hinweise liefern, wie ein Merkmal, welches eine Abweichung von einer Regel darstellt, geändert werden kann, um regelkonform zu werden. Im Rahmen der Validierung werden somit vorzugsweise dem Validierungsergebnis auch Warnungen und/oder Hinweise sowie Vorschläge zugefügt.

Regeln können hierfür bei einer Ausführungsform einen Satz Mindestanforderungen und einen Satz Vorzugsanforderungen umfassen. Hierbei übertrifft der Satz von Vorzugsanforderungen die Mindestanforderungen. Der Satz von Mindestanforderungen ist somit immer erfüllt, wenn der Satz von Vorzugsanforderungen erfüllt ist. Sind die Vorzugsanforderungen nicht erfüllt, so werden Warnungen und Vorschlagsinformationen dem Validierungsergebnis zugefügt.

Neben Regeln, deren Inhalt durch Merkmale von Vorrichtungen festgelegt sind, hat es sich gezeigt, dass auch menschliches Erfahrungswissen vorteilhaft mit einbezogen werden kann. Nicht jede technisch realisierbare und auch messbare technische Lösung ist auch in der Praxis sinnvoll oder vorteilhaft. Erfahrungswissen von Experten kann daher beispielsweise hilfreich sein, sich aufdrängende technische Lösungen, die sich bereits mehrfach als nicht vorteilhaft herausgestellt haben, in Form von Expertenwissenregeln als nicht ausführbar zu kennzeichnen. Diese können jede Art von Expertenwissen enthalten, welches sich in Regelform abbilden lässt. Das Expertenwissen kann aber auch Vorschläge, Hinweise und Warnungen als Regelanwendungsergebnis liefern. Beispielsweise kann auf eine günstige Festlegung von Bezügen hingewiesen werden, wenn die bisherigen Angaben der Erzeugnisspezifikation zwar die Messbarkeit nicht beeinträchtigen, aber für die Vermessung eher ungünstig gewählt sind.

Besonders bevorzugt umfassen einige Regeln Vorgaben, die es ermöglichen eine Übereinstimmung der Angaben der Erzeugnisspezifikation mit den Vorgaben der entsprechenden Regel auch quantitativ zu ermitteln. Ein solcher Übereinstimmungswert gibt ein Maß für die Übereinstimmung mit den Vorgaben der Regel an. Eine Regel, die eine solche quantitative Bewertung ermöglicht, wird als Bewertungsregel bezeichnet. Jede Regel kann auch Vorgaben zum Ermitteln eines Übereinstimmungswertes umfassen. Eine Regel kann auch mehrere voneinander abhängig oder unabhängige Übereinstimmungswerte bei der Regelanwendung erzeugen. Ein Übereinstimmungswert kann beispielsweise eine Messdauer angeben, die zum Vermessen eines Prüfmerkmals benötigt wird, dessen Vermessung von den Fähigkeiten oder Beschränkungen der entsprechenden Regel abhängig ist. Eine anderer Übereinstimmungswert kann eine Angabe über die Anzahl der benötigten Taster oder die Anzahl der benötigten Tasterwechsel angeben etc. Anhand der Übereinstimmungswerte kann somit bereits bei der Konstruktion auf einfache Weise ermittelt werden, wie hoch der Messaufwand für das konstruierte Erzeugnis oder dessen Bestandteile sein wird.

Ferner wird die Möglichkeit geschaffen, festzustellen welche Messmaschinen besonders geeignet sind, das Erzeugnis zu verifizieren. Sind mehrere alternative Messmaschinen und Messgeräte vorhanden, so kann die Validierung mehrfach mit verschiedenen dynamisch angepassten Regelsätzen ausgeführt werden. Wobei die eingebundenen, d.h. aktuell registrierten Regelbibliotheken variiert werden. Jene Regelbibliothek oder jene Zusammenstellung von Regelbibliotheken, die anhand der Übereinstimmungswerte den geringsten Aufwand und/oder den höchsten Durchsatz gewährleistet, korrespondiert dann mit den entsprechenden vorteilhaft einzusetzenden Messmaschinen und Messgeräten.

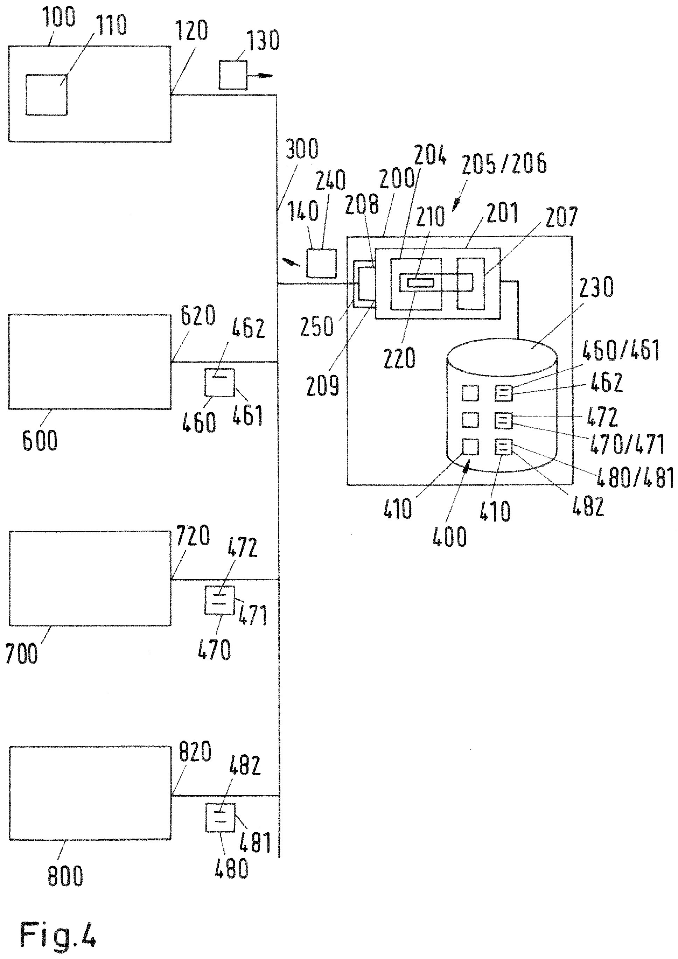

Wie in Fig.4 dargestellt ist, wird die Validierung vorzugsweise von einem zentralisierten Validierungsdienst 210 oder -service angeboten. Hierzu ist der Computer 100, auf dem eine CAD-Software 110 zum Erzeugen einer Erzeugnisspezifikation 130 ausgeführt wird, mittels eines Kommunikationsnetzwerks 300 mit einer zentralen Validierungsvorrichtung 200 mit einer Validierungseinheit 201 verbunden. Über eine Schnittstelle 120 der CAD-Software 110 wird eine Erzeugnisspezifikation 130 an den zentralen Dienst 210, beispielsweise in Form einer Datei oder eines Dateienpakets übertragen.

Die Validierungseinheit 201 ist auf einer Rechnereinheit 206, die beispielsweise als ein Web-Server 205 ausgebildet ist, realisiert. Die Rechnereinheit 206 umfasst einen Prozessor 204 und Arbeitsspeicher 207. Der zentrale Dienst 210 ist in der Validierungseinheit 201 mittels einer Validierungssoftware, einem Computerprogramm 220, welches zur Ausführung der logischen und mathematischen Operationen in der Lage ist, wenn es auf einer Rechnereinheit 206 oder mehreren Rechnereinheiten ausgeführt wird, ausgebildet. Die Validierungseinheit 201 umfasst ferner einen Eingang 208 und einen Ausgang 209. Der Ausgang 209 und der Eingang 208 können als Netzwerkschnittstelle 250 der Validierungsvorrichtung 200 ausgebildet sein. In einem Speicher 230 der Validierungsvorrichtung 200 sind Regelbibliotheken 400 abgelegt. Die Regelbibliotheken können in Dateien 410 vorliegen. In einer alternative Ausführungsform, welche hier nicht dargestellt ist, können die Regeln oder Regelbibliotheken in einer Datenbank gespeichert sein und über einen Datenbankschlüssel einer der Bibliotheken zugeordnet sein.

Die Bibliotheken 400 umfassen zumindest eine Messbarkeitsregelbibliothek 470, die Messbarkeitsregeln 472 umfasst. Zusätzlich sind auch ein oder mehrere Prozessschrittregelbibliotheken 460 mit Prozessschrittregeln 462 und eine oder mehrere Expertenwissenregelbibliotheken 480 mit Expertenwissenregeln 482 in Form von Dateien 471, 461, 481 bei der Validierungseinheit 201 registriert. Außerdem können eine oder mehrere Normregelbibliotheken (nicht dargestellt) registriert sein, die zusätzlich eine Überprüfung auf Normkonformität ermöglichen.

Die Registrierung erfolgt beispielsweise, indem eine Produktionsvorrichtung 600 und/oder eine Messmaschine 700, die jeweils ebenfalls über eigene Kommunikationsschnittstellen 620, 720 und das Kommunikationsnetzwerk 300 mit der Validierungseinheit 201 der Validierungsvorrichtung 200 verknüpft sind, ihre entsprechende Regelbibliothek oder Regelbibliotheken 460, 470, z.B. in Form der Dateien 471, 461, übermitteln. Das Expertenwissen kann mittels eines weiteren Computers 800 erfasst und in eine Expertenwissenregelbibliothek 480 gewandelt werden. Diese Expertenwissenregelbibliothek 480 wird beispielsweis über eine Netzwerkschnittstelle 820 und das Netzwerk 300 an die Validierungseinheit 201 der Validierungsvorrichtung 200 in Form der Datei 821 zum Registrieren übermittelt.

Der Validierungsdienst 210 wendet die in den registrierten Regelbibliotheken 400 enthaltenen Regeln an und überprüft, ob die Erzeugnisspezifikation den Vorgaben der einzelnen Regeln entspricht. Hierbei werden logische und mathematische Kombinationen von Regeln angewendet. Gegebenenfalls werden dem Validierungsergebnis Warnungen, und/oder Vorschläge für Verbesserungen zugefügt. Wenn die Regelbibliotheken 400 Bewertungsregeln umfassen, die eine quantitative Ermittlung eines Übereinstimmungswertes ermöglichen, so werden auch diese bestimmt. Basierend hierauf werden dem Validierungsergebnis gegebenenfalls ebenfalls Vorschläge oder Informationen zugefügt, die den Aufwand für die Vermessung oder auch für andere Prozessschritte angeben, sofern die mit dem Prozessschritt korrespondierenden Regeln eine Ermittlung von Übereinstimmungswerten ermöglichen. Das Validierungsergebnis 240 wird von dem Validierungsdienst 210 beispielsweise in Form einer Ergebnisdatei und/oder mittels Rückübermittlung einer modifizierten Erzeugnisspezifikation 140 über das Kommunikationsnetzwerk 300 übermittelt, wobei die modifizierte Erzeugnisspezifikation 140 vorzugsweise mit Anmerkungen versehen ist, die das Validierungsergebnis 240 oder ein Teil hiervon sind.

Bei einigen Ausführungsformen wird anhand der Erzeugnisspezifikation vor der Anwendung der Messbarkeitsregeln zunächst ein Prüfplan ermittelt und die Messbarkeitsregeln auf den Prüfplan angewendet.

Bei der dargestellten Ausführungsform ist der Validierungsdienst 210 zentralisiert umgesetzt. Andere Ausführungsformen können vorsehen, das die Validierung auf demselben Computer ausgeführt wird wie die CAD-Software. Der Validierungsdienst und die CAD-Software kommunizieren hier ebenfalls über entsprechende Programmschnittstellen oder über einen gemeinsamen geteilten Zugriff auf die Dateien, die die Erzeugnisspezifikation enthalten.

Bei anderen Ausführungsformen ist der Validierungsdienst als Teil einer Messsoftware realisiert.

### Bezugszeichenliste

- 10: Ablaufplan
- 20: Konstruktionsschritt
- 30: Produktionsschritt
- 40: Verifikationsschritt
- 45: Erzeugnis nicht korrekt verifizierbar
- 46: erkannt, dass Erzeugnis nicht korrekt verifizierbar ist
- 47: nicht erkannt, dass Erzeugnis nicht korrekt verifizierbar ist
- 50: Validierungsschritt
- 60: interne Revision
- 70: Vorgaben
- 80: Prüfplan (abstrakt)
- 100: Qualitätserzeugnis
- 110: CAD-Software
- 120: Schnittstelle
- 130: Erzeugnisspezifikation
- 140: modifizierte Erzeugnisspezifikation
- 200: Validierungsvorrichtung
- 201: Validierungseinheit
- 204: Prozessor
- 205: Web-Server
- 206: Rechnereinheit
- 207: Arbeitsspeicher
- 208: Eingang
- 209: Ausgang
- 210: Validierungsdienst
- 220: Validierungssoftware (Computerprogramm)
- 230: Speicher
- 240: Validierungsergebnis
- 250: Kommunikationsschnittstelle
- 300: Kommunikationsnetzwerk
- 400: Regelbibliotheken
- 402: Regeln
- 410: Dateien
- 411: Normregelbibliothek
- 412: Prozessschrittregelbibliothek
- 413: Logistikregelbibliothek
- 414: weiter Prozessschrittbibliothek
- 415: andere Prozessschrittbibliothek
- 460: Prozessschrittregelbibliothek
- 461: Datei
- 462: Prozessschrittregeln
- 470: Messbarkeitsregelbibliothek
- 471: Datei
- 472: Messbarkeitsregeln
- 480: Expertenwissenregelbibliothek
- 481: Datei
- 482: Expertenwissenregeln
- 600: Produktionsvorrichtung
- 620: Kommunikationsschnittstelle
- 700: Messmaschine
- 720: Kommunikationsschnittstelle
- 800: weiterer Computer
- 820: Netzwerkschnittstelle
- 821: Datei

## Patentansprüche

1. Verfahren zur Validierung von Erzeugnisspezifikationen (130) für qualitätsgeprüfte Erzeugnisse, bei deren Qualitätsprüfung mindestens eine geometrische Eigenschaft des jeweiligen Erzeugnisses (100) oder eines Bestandteils des jeweiligen Erzeugnisses (100) vermessen wird,
umfassend die Schritte:
Erfassen einer Erzeugnisspezifikation (130) für ein Erzeugnis (100);
Prüfen der Erzeugnisspezifikation (130) auf Übereinstimmung mit Vorgaben; und
Ausgeben eines Validierungsergebnisses (140, 240);
**dadurch gekennzeichnet, dass**
zumindest ein Teil der Vorgaben als Regeln (402) erfasst wird, wobei die erfassten Regeln (402) zumindest Messbarkeitsregeln (472) umfassen, die Fähigkeiten und/oder Beschränkungen für ein Ausführen von Messungen angeben, und das Prüfen der Erzeugnisspezifikation (130) auf Übereinstimmung mit den Vorgaben ein Anwenden der Regeln umfasst, wobei bei jeder Regelanwendung als ein Regelanwendungsergebnis zumindest eine Übereinstimmung oder Abweichung mit der entsprechenden Regel festgestellt wird,
und das Validierungsergebnis (140, 240) auf Basis der Regelanwendungsergebnisse erzeugt wird.

2. Verfahren nach Anspruch 1, **dadurch gekennzeichnet, dass** das Erfassen der Erzeugnisspezifikation (130) über eine Softwareschnittstelle (120) eines Konstruktionsprogramms (110) erfolgt.

3. Verfahren nach einem der vorangehenden Ansprüche, **dadurch gekennzeichnet, dass** das Erfassen der Erzeugnisspezifikation (130) über eine Netzwerkschnittstelle (820) erfolgt.

4. Verfahren nach einem der vorangehenden Ansprüche, **dadurch gekennzeichnet, dass** das Erfassen der Erzeugnisspezifikation (130) über ein Einlesen einer oder mehrere Dateien erfolgt.

5. Verfahren nach einem der vorangehenden Ansprüche, **dadurch gekennzeichnet, dass** beim Erfassen der Regeln zumindest eine als Bewertungsregel ausgebildete Regel erfasst wird, deren Anwendung neben der Aussage, ob eine Übereinstimmung mit den Vorgaben der Regel beseht oder nicht, auch mindestens eine quantitative Aussage über eine Übereinstimmung mit den Vorgaben als Regelergebnis erzeugt wird.

6. Verfahren nach einem der vorangehenden Ansprüche, **dadurch gekennzeichnet, dass** beim Erfassen der Regeln (402) zusätzlich Prozessschrittregeln (462) erfasst werden, wobei Prozessschrittregeln (462) Einschränkungen und/oder Fähigkeiten mindestens einer Fertigungsvorrichtung (600) zum Ausführen eines Prozessschrittes (30) bei der Herstellung des jeweiligen Erzeugnisses (100) angeben.

7. Verfahren nach einem der vorangehenden Ansprüche, **dadurch gekennzeichnet, dass** zumindest einzelne der Regeln (402) einen Satz Mindestanforderungen und mindestens einen Satz Vorzugsanforderungen umfassen, wobei als Regelanwendungsergebnis eine Übereinstimmung mit einer der zumindest einzelnen der Regeln festgestellt wird, wenn der eine Satz Mindestanforderungen erfüllt ist, und dem Regelanwendungsergebnis zusätzlich eine Warnung und/oder Vorschlaginformationen zugefügt werden, wenn nicht auch der mindestens eine Satz von Vorzugsanforderungen erfüllt ist, wobei der mindestens eine Satz von Vorzugsanforderungen die Mindestanforderungen des mindestens einen Satzes von Mindestanforderungen übertrifft und der mindestens eine Satz von Mindestanforderungen erfüllt ist, wenn der mindestens eine Satz von Vorzugsanforderungen erfüllt ist.

8. Verfahren nach einem der vorangehenden Ansprüche, **dadurch gekennzeichnet, dass** die Regeln in Form von Bibliotheken (400, 460, 470, 480) erfasst werden.

9. Verfahren nach einem der vorangehenden Ansprüche, **dadurch gekennzeichnet, dass** die Fähigkeiten und Beschränkungen mindestens einer Fertigungsmaschine (600) in einer der Bibliotheken (400, 460, 470,480) als Prozessschrittregeln erfasst werden.

10. Verfahren nach einem der vorangehenden Ansprüche, **dadurch gekennzeichnet, dass** beim Erfassen der Regeln Expertenwissenregeln (482) erfasst werden, die Fähigkeiten oder Beschränkungen aufgrund von Erfahrungswissen mindestens eines Prozessschrittes (30) oder Messschrittes (40) angeben.

11. Verfahren nach einem der vorangehenden Ansprüche, **dadurch gekennzeichnet, dass** beim Erfassen der Regeln zusätzlich Normregeln (411) erfasst werden, die Vorgaben einer Norm angeben.

12. Verfahren nach einem der vorangehenden Ansprüche, **dadurch gekennzeichnet, dass** zur Überprüfung einer Tauglichkeit einer Maschine (600), die in einem Prozessschritt (30) bei der Fertigung eingesetzt werden soll, die Prozessschrittregeln (462), welche die Fähigkeiten und Beschränkungen der einen Maschine (600) festlegen, oder, zur Überprüfung einer Tauglichkeit einer Messvorrichtung (700), die für die Messung des Erzeugnisses (100) oder eine Bestandteils des Erzeugnisses (100) eingesetzt werden soll, die Messbarkeitsregeln (452), welche die Fähigkeiten und Beschränkungen für ein Ausführen von Messungen mit der Messvorrichtung (700) angeben, als Vorgaben erfasst werden und als Erzeugnisspezifikation (130) eine bereits zuvor validierte Erzeugnisspezifikation (130) erfasst wird, die zuvor bereits als den Vorgaben entsprechend eingestuft wurde, wobei die Maschine (600) oder die Messeinrichtung (700) als tauglich eingestuft werden, sofern für die Erzeugnisspezifikation (130) erneut festgestellt wird, dass diese den Vorgaben entspricht.

13. Verfahren nach einem der vorangehenden Ansprüche, **dadurch gekennzeichnet, dass** die Vorgaben mindestens zwei alternative Regelsätze umfassen, die die Fähigkeiten und/oder Beschränkungen für ein Ausführen von Messungen für alternativ einsetzbare Messvorrichtungen sind, wobei diese mindestens zwei alternativen Regelsätze jeweils zumindest einzelne Bewertungsregeln umfassen, bei deren Regelanwendung das Regelanwendungsergebnis zusätzlich jeweils mindestens einen Übereinstimmungswert, der ein quantitatives Maß für die Übereinstimmung mit der Regel angibt, umfasst, und anhand der Übereinstimmungswerte ermittelt wird, welche der alternativ einsetzbaren Messvorrichtungen einsetzbar und/oder für deinen Einsatz zu bevorzugen ist.

14. Verfahren nach einem der vorangehenden Ansprüche, **dadurch gekennzeichnet, dass** anhand der Erzeugnisspezifikation (130) ein von konkreten Messvorrichtungen unabhängiger Prüfplan generiert wird, der Abhängigkeiten der Prüfmerkmale untereinander analysiert und die Regeln (402) der Vorgaben, die Messbarkeitsregeln (472) sind, auf den Prüfplan angewendet werden.

15. Computerprogramm (220) zum Ausführen einer Validierung von Erzeugnisspezifikationen (130) für qualitätsgeprüfte Erzeugnisse (100), bei deren Qualitätsprüfung mindestens eine geometrische Eigenschaft des jeweiligen Erzeugnisses oder eines Bestandteils des jeweiligen Erzeugnisses (100) vermessen wird, umfassend Programmcode, der bei der Ausführung auf einer Prozessoreinheit oder mehreren Prozessoren das Verfahren nach einem der Ansprüche 1 bis 14 ausführt.

16. Validierungsvorrichtung (200) zum Ausführen einer Validierung von Erzeugnisspezifikationen (130) für qualitätsgeprüfte Erzeugnisse (100), bei deren Qualitätsprüfung mindestens eine geometrische Eigenschaft des jeweiligen Erzeugnisses (100) oder eines Bestandteils des jeweiligen Erzeugnisses (100) vermessen wird, umfassend:
eine Validierungseinheit (201) mit einem Eingang zum Erfassen einer Erzeugnisspezifikation, wobei die Validierungseinheit (201) ausgebildet ist, die Übereinstimmung der Erzeugnisspezifikation (130) mit Vorgaben, die in Form von Regeln (402) vorliegen, zu prüfen und die Validierungseinheit (201) einen Ausgang zum Ausgeben eines Validierungsergebnis umfasst, das anhand der Übereinstimmungen und/oder Abweichungen mit den Vorgaben abgeleitet ist.

17. Validierungsvorrichtung (200) nach Anspruch 16, **dadurch gekennzeichnet, dass** mit der Validierungseinheit (201) ein Speicher (230) gekoppelt ist, in dem die Regeln (402) abgelegt sind.

18. Validierungsvorrichtung (200) nach Anspruch 16 oder 17, **dadurch gekennzeichnet, dass** die Validierungseinheit (201) eine Rechnereinheit (206) mit einem oder mehreren Prozessoren und Arbeitsspeicher (207) umfasst und die Funktionalität der Validierungseinheit (201) des mittels Programmcodes ausgebildet ist, der auf dem einen oder den mehreren Prozessoren (204) ausgeführt wird.

19. Validierungsvorrichtung (200) nach einem der Ansprüche 16 bis 18, **dadurch gekennzeichnet, dass** der Eingang (208) und der Ausgang (209) eine Netzwerkschnittstelle (250) sind.
